# EUROPEAN PATENT APPLICATION

(11) **EP 2 099 259 A1**
(43) Date of publication of application: **09.09.2009**
(21) Application number: 09250614.6
(22) Date of filing: 04.03.2009
(51) Int. Cl.: H05B 33/08

(54) **Unipolar (DIS)charging LED drive method and circuit thereof**

(30) Priority: 07.03.2008 US 34695 P
(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

A unipolar (dis)charge LED drive method and circuit thereof which is having a diode connected in series of forward polarity with an LED before being connected in parallel with a unipolar capacitor of the same polarity to constitute the first component, and having a diode, a capacitor and an optional light-emitting diode to constitute the second component; the first and second components are connected in series of reversed polarity to be driven by AC, or DC power capable of periodical exchange polarity.

## Description

### BACKGROUND OF THE INVENTION

### (a) Field of the Invention

The present invention is related to an innovative circuit design of LED drive method and circuit that can be driven by AC or by a DC power source with period of polarity exchange, and more particularly, to one that the operation function is through the capacitor to produce unipolar charging/discharging electric power to drive the light emitting diode, so as to have the advantages of low thermal loss, power consumption, and production cost.

### (b) Description of the Prior Art:

Whereas conventionally a drive circuit in a light emitting diode driven by AC, or by a DC power source with period of polarity exchange has to be always comprised of a bridge rectification and a drop limiting resistance, thermal loss, wasted power, and increased production cost resulted from the light emitting diode has its flaws both of bridge rectification and drop limiting resistance are the flaws found with the LED of the prior art.

### SUMMARY OF THE INVENTION

The primary purpose of the present invention is to provide a unipolar (dis)charging LED drive method and circuit thereof. The present invention is comprised of a first component and a second component in series connection of reversed polarity. The first component includes a diode series connected of forward polarity with an illuminating conduct polarity of a light emitting diode before being parallel connected of the same polarity with a unipolar capacitor; and the second component is constituted by a diode and a unipolar capacitor in series connection, and the diode can be selected as needed to series connect with an optional light emitting diode, thereby the constitution method of the second component includes:
(1) when the optional light emitting diode is selected to be installed, the diode may be series connected with the light emitting diode at forward polarity with the illuminating conduct polarity of the light emitting diode before being parallel connected of the same polarity with a unipolar capacitor, thereby to constitute a first type of the second component;
(2) if the optional light emitting diode is selected not to be installed in the second component, the diode is parallel connected of the same polarity with the unipolar capacitor to constitute a second type of the second component.

The first component is connected in series of reversed polarity with either type of the second component to constitute a LED drive circuit (U100) capable of charging and discharging. The two ends of the LED drive circuit (U100) capable of charging and discharging are for inputting:
(1) The AC power with constant or variable voltage and constant or variable frequency; or
(2) The electric power with constant or variable voltage and constant or variable polarities alternated periods converted from DC power source; or
(3) The electric power with constant or variable voltage and constant or variable polarities alternated periods converted from DC power which is further rectified from AC power.

### BRIEF DESCRIPTION OF THE DRAWINGS

Fig. 1 is a schematic view showing a basic circuit configuration of the present invention.
Fig. 2 is a circuit example schematic diagram showing a zener diode is further installed to a light emitting diode in the circuit of Fig. 1.
Fig. 3 is a circuit example schematic diagram showing that a charge/discharge device can be parallel connected across the two ends of a current limiting resistance and a light emitting diode in series connection in the circuit of Fig. 2.
Fig. 4 is a circuit example schematic block diagram showing that the present invention is series connected to an AC power modulator of series connection type.
Fig. 5 is a circuit example schematic block diagram showing that the present invention is parallel connected with an AC power modulator of parallel connection type.
Fig. 6 is a circuit example schematic block diagram showing that the present invention is series connected to a modulated periodically polarities alternated power modulator of series connection type.
Fig. 7 is a circuit example schematic block diagram showing that the present invention is parallel connected with a modulated periodically polarities alternated power modulator of parallel connection type.
Fig. 8 is a circuit example schematic block diagram showing that the present invention is series connected to a modulated periodically polarities alternated power modulator of series connection type before is electrically driven by an output from DC to AC inverter.
Fig. 9 is a circuit example schematic block diagram showing that the present invention is parallel connected with a modulated periodically polarities alternated power modulator of parallel connection type before is electrically driven by an output from a DC to AC inverter.
Fig. 10 is a circuit example schematic block diagram showing that the present invention is electrically driven by an output from a DC to AC inverter.
Fig. 11 is a circuit example schematic block diagram showing that the present invention is series connected with an impedance component.
Fig. 12 is a circuit example schematic block diagram showing that the impedance components connected in series to the present invention executes series connection, parallel connection, or series and parallel connection by means of the switching device.

### DESCRIPTION OF MAIN COMPONENT SYMBOLS

C101, C102: Unipolar capacitor
CR101, CR102, CR201, CR202: Diode
ESD 101, ESD 102: Charge/discharge device
I103, I104: Inductive impedance component
LED101, LED102: Light emitting diode
R101, R102: Discharge resistor
R103, R104: Current limit resistor
U100: LED drive circuit capable of charging and discharging
U101: The first component
U102: The second component
ZD101, ZD 102: Zener diode
300: AC power modulator of series connection type
310: AC power modulator of parallel connection type
400: Modulated periodically polarities alternated power modulator of series connection type
410: Modulated periodically polarities alternated power modulator of parallel connection type
500: Impedance component
600: Switching device
4000: DC to AC Inverter

### DETAILED DESCRIPTION OF THE PREFERRED EMBODIMENTS

A unipolar (dis)charging LED drive method and circuit thereof disclosed in the present invention is comprised of a first component and a second component in series connection of reversed polarity. The first component is constituted by a diode connected in series of forward polarity with an illuminating conduct polarity of a light emitting diode before being connected in parallel of the same polarity with a unipolar capacitor; and the second component is either constituted by a diode and a unipolar capacitor in series connection, or the diode can be selected as needed to series connect with an optional light emitting diode. The constitution methods of the second component include: (1) when the optional light emitting diode is selected to be installed, the diode may be series connected with the light emitting diode at forward polarity with the illuminating conduct polarity of the light emitting diode before being parallel connected of the same polarity with a unipolar capacitor, thereby to constitute a first type of the second component; and (2) if the optional LED is selected not to be installed in the second component, the diode is parallel connected of the same polarity with the unipolar capacitor to constitute a second type of the second component.

The first component is connected in series of reversed polarity with either type of the second component to constitute an LED drive circuit (U100) capable of charging and discharging. The two ends of the LED drive circuit (U100) capable of charging and discharging are for inputting:
(1) The AC power with constant or variable voltage and constant or variable frequency; or
(2) The electric power with constant or variable voltage and constant or variable polarities alternated periods converted from DC power source; or
(3) The electric power with constant or variable voltage and constant or variable polarities alternated periods converted from DC power which is further rectified from AC power.

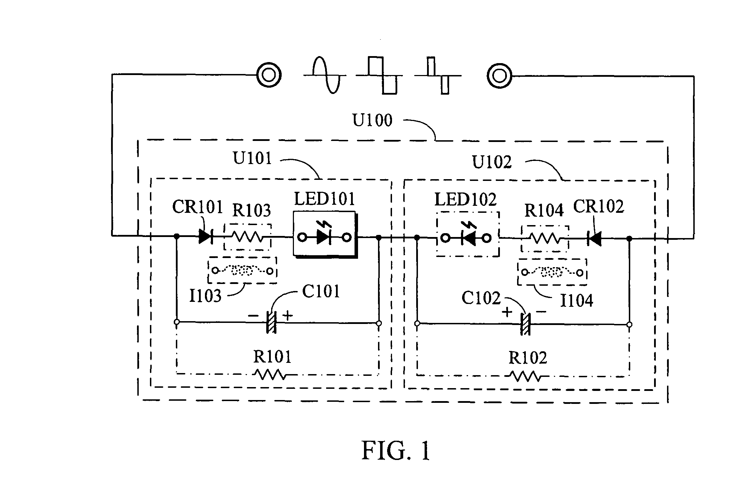

Referring to Fig. 1 is a schematic view of a basic circuit configuration of the present invention.

As illustrated in Fig.1, the unipolar (dis)charging LED drive method and circuit thereof is essentially comprised including:
A unipolar capacitor: it is comprised of unipolar capacitors (C101), (C102) that are capable of unipolar charging and discharging, wherein said unipolar capacitors may be of same or different electric capacity;
The first component (U101): it is comprised of a diode (CR101) capable of executing uni-directional conduction in series connection of forward polarity to at least one light emitting diode (LED101) before being parallel connected of the same polarity with a unipolar capacitor, thereby to constitute the first component (U101);
The second component (U102): it is comprised of a diode (CR102) capable of executing uni-directional conduction in series connection of forward polarity to at least one light emitting diode (LED 102) before being parallel connected of the same polarity with a unipolar capacitor, thereby to constitute the second component (U102);
In addition, if the light emitting diode (LED 102) is selected not to be installed as needed, the diode (CR102) can be directly parallel connected of the same polarity with the unipolar capacitor (C102), thereby to constitute the second component (U102);
The first component (U101) and the second component (U102) are series connected of reversed polarity to constitute the LED drive circuit (U100) capable of charging and discharging, whereof the two ends of the LED drive circuit (U100) capable of charging and discharging is arranged for inputting:
   (1) The AC power with constant or variable voltage and constant or variable frequency; or
   (2) The electric power with constant or variable voltage and constant or variable polarities alternated periods converted from DC power source; or
   (3) The electric power with constant or variable voltage and constant or variable polarities alternated periods converted from DC power which is further rectified from AC power.
In the LED drive circuit (U100) capable of charging and discharging, multiple matching modes are available for choice among the light emitting diode (LED101) constituting the first component (U101), and the light emitting diode (LED 102) constituting the second component (U102) as follows:
   1. The light emitting diode (LED101) is comprised of one or a plurality of light emitting diodes;
   2. If the second component (U102) is selected to include the light emitting diode (LED 102), the light emitting diode (LED 102) is comprised of one or a plurality of light emitting diodes;
   3. The constitution ways of the light emitting diode (LED101) or light emitting diode (LED 102) include to be constituted individually by one light emitting diode of forward illuminating current polarity, or to be constituted by two or more than two light emitting diodes of forward illuminating current polarity in series or parallel connection, or to be constituted by three or more than three light emitting diodes of forward illuminating current polarity in series connection, parallel connection or series-parallel connection;
   4. The numbers of light emitting diodes which constitute the light emitting diode (LED101) and the numbers of light emitting diodes which constitute the light emitting diode (LED 102) can be the same or different;
   5. Whereas the electric power source is related to an AC power source, or a bi-directional power source with polarity alternated periods that is converted from a DC power source, the light emitting diode (LED101) or the light emitting diode (LED 102) is not continuously conducted by the DC power, thus to allow selection of a peak value of the working voltage for each light emitting diode referring to the inputted voltage wave shape and duty cycle of current conduction and disconnection, as well as a selected working current value. The selections include (1) having a voltage lower than a normal rated voltage as the peak voltage; (2) having the normal rated voltage as the peak voltage; and (3) having a voltage higher than the normal rated voltage as the peak voltage.
The present invention works on having a supply of power source with a polarity to charge the unipolar capacitor (C102) from the second component (U102) through the diode (CR101) and the light emitting diode (LED101) from the first component (U101), and the charged electric power keeps the light emitting diode (LED101) illuminated; and having the supply of power source with the other polarity to charge the unipolar capacitor (C101) from the first component (U101) through the diode (CR102) and the light emitting diode (LED102) from the second component (U102), and the charged electric power keeps the light emitting diode (LED102) illuminated. If the second component (U102) is not disposed with the light emitting diode (LED102), the electric power directly charges the unipolar capacitor (C101) from the first component (U101) through the diode (CR102) of the second component (U102).

When applied in practical applications, the LED drive circuit (U 100) capable of charging and discharging as illustrated in Fig. 1 may be optionally disposed with multiple auxiliary circuit components as applicable including the selection of either to be or not to be installed as needed and the selection of the installed quantity to be one or more than ones. In case of more than one components are selected, they can be in series connection, parallel connection or series-parallel connection of selected polarity relationship according to the requirements of the circuit function; the constituted components and the optional auxiliary circuit devices including:
The discharging resistance (R101): it is an optional device connected in parallel with both ends of the unipolar capacitor (C101) from the first component (U101) to discharge residual electric charge from the unipolar capacitor (C101);
The discharging resistance (R102): it is an optional device connected in parallel with both ends of the unipolar capacitor (C102) from the second component (U102) to discharge residual electric charge from the unipolar capacitor (C 102);
The current limiting resistance (R103): it is an optional device which is arranged to be respectively connected in series to the diode (CR101) and the light emitting diode (LED101) from the first component (U101) to limit currents passing through the light emitting diode (LED101); the current limiting resistance (R103) may be replaced with an inductive resistance (I103);
The current limiting resistance (R104): it is an optional device which is arranged to be respectively connected in series to the diode (CR102) and the light emitting diode (LED 102) from the second component (U102) to limit currents passing through the light emitting diode (LED 102); the current limiting resistance (R104) may be replaced with an inductive resistance (I104).

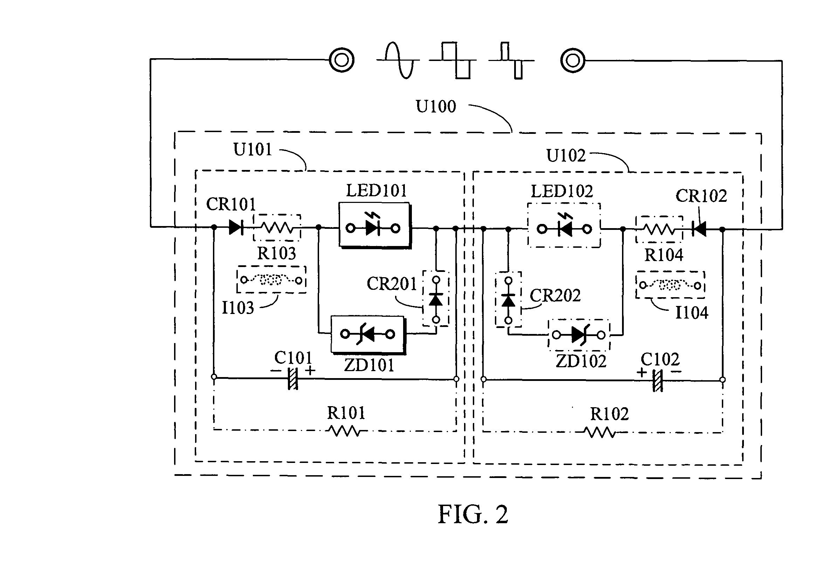

In addition, to avoid the light emitting diode being damaged or reduced service life by abnormal voltage, in the LED drive circuit (U100) capable of charging and discharging of the present invention, a zener diode may be further connected in parallel with both ends of the light emitting diode, as illustrated in Fig. 2 showing a circuit example schematic diagram of having added the zener diode to the light emitting diode in the circuit illustrated in Fig. 1; or at least one zener diode may be series connected with at least one diode to jointly generate zener voltage function for parallel connecting to both ends of the light emitting diode.

### Detailed description is as follows:

In the circuit examples as illustrated in Fig. 2, a zener diode (ZD101) is parallel connected to both ends of the light emitting diode (LED101) from the first component (U101) to protect the light emitting diode, whereof their polarity relationship is that the zener voltage of the zener diode (ZD101) is used to limit the working voltage across the two ends of the light emitting diode (LED101); as applicable, the diode (CR201) may be selected to be series connected with the zener diode (ZD101), whereof providing advantages of (1) protecting the zener diode (ZD101) against reversed current; and (2) achieving temperature compensation results between the zener diode (ZD101) and the diode (CR201).

When the light emitting diode (LED102) is selected to be included in the second component (U102), a zener diode (ZD102) is parallel connected with both ends of the light emitting diode (LED 102), whereof their polarity relationship is that the zener voltage of the zener diode (ZD102) is used to limit the working voltage across the two ends of the light emitting diode (LED102); as applicable, the diode (CR202) may be selected to be series connected with the zener diode (ZD102), whereof providing advantages of (1) protecting the zener diode (ZD102) against reversed current; and (2) achieving temperature compensation results between the zener diode (ZD102) and the diode (CR202).

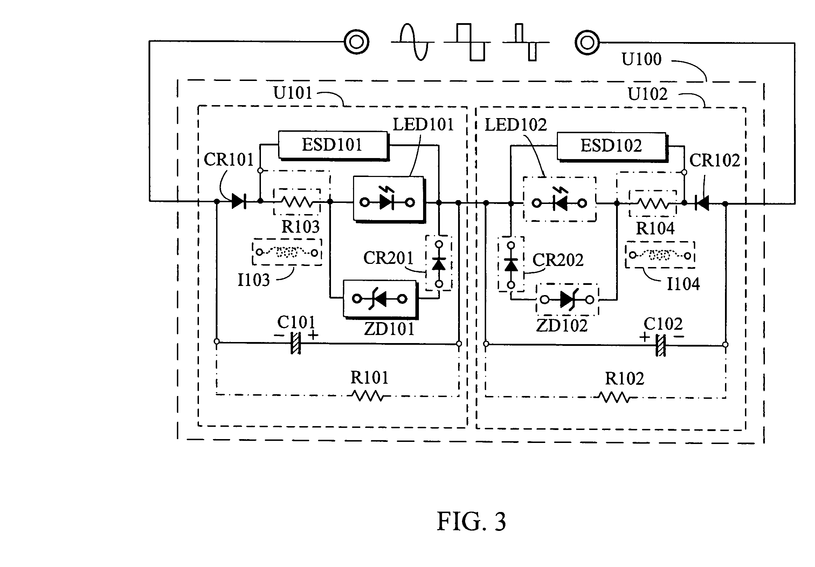

To achieve the lighting stability of the light source produced by the light emitting diode and reduce the lighting pulsation, in the LED drive circuit (U100) capable of charging and discharging, both or at least one of the first component (U101) and the second component (U102) can be further installed with a charge/discharge device. Fig. 3 shows a circuit example schematic diagram that a charge/discharge device is parallel connected across the two ends of the light emitting diode and the series connected current limiting resistance in the circuit of Fig. 2.

In the circuit examples as illustrated in Fig. 3, to promote the lighting stability of the light source produced by the light emitting diode, the two ends of the light emitting diode (LED101) and the current limiting resistance (R103) in series connection from the first component (U101), or directly at the two ends of the light emitting diode (LED101) can be further parallel connected with a charge/discharge device (ESD 101) according to the polarity for randomly charging or discharging the electric power, whereby to stabilize the operation of light emission from the light emitting diode (LED101). If the light emitting diode (LED 102) is selected for the second component (U102), a charge/discharge device (ESD102) can be selected as needed to be parallel connected with the two ends of the light emitting diode (LED 102) and the current limiting resistance (R104) in series connection, or directly parallel connected at the two ends of the light emitting diode (LED 102) according to the polarity for randomly charging or discharging the electric power, whereby to stabilize the operation of light emission from the light emitting diode (LED 102).

The charge/discharge devices (ESD101 ) and (ESD102) can be constituted by the conventional charging and discharging batteries, or super-capacitors or capacitors, etc.

In addition, the unipolar (dis)charging LED drive method and circuit thereof of the present invention, whereof both or at least one of the first component (U101) and the second component (U102) can be further disposed with the charge/discharge devices (ESD101), (ESD102) for randomly charging or discharging the electric power, whereby to stabilize the operation of light emission from the light emitting diodes (LED101) and (LED 102); and in case of power failure, either or both of the reserved electric power in the charge/discharge devices (ESD101) and ESD 102 discharges the reserved electric power, so as to continue supplying power to maintain at least one of the light emitting diode (LED101) or (LED 102) illuminated.

The first component (U101), the second component (U102), the light emitting diodes (LED101), (LED 102) as well as various aforesaid optional auxiliary circuit components as illustrated in Figs. 1 through 3 are based on application needs to be optionally installed or not installed as needed, and the installation quantity include constitution by one or more than ones, wherein if more than one components are selected in the application, they can be in series connection, parallel connection, or series-parallel connection of selected polarity relationship according to the requirements of the circuit function; whereby the constituted components and optional auxiliary circuit components including:
1. The first component (U101) can be constituted by one or by more than ones in series connection, parallel connection, or series-parallel connection;
2. The second component (U102) can be constituted by one or by more than ones in series connection, parallel connection, or series-parallel connection;
3. The light emitting diode (LED101) can be constituted by one light emitting diode of forward illuminating current polarity, or by two or more than two light emitting diodes in series or parallel connection of forward illuminating current polarity, or by three or more than three light emitting diodes in series connection, parallel connection, or series-parallel connection of forward illuminating current polarity;
4. The light emitting diode (LED 102) can be constituted by one light emitting diode of forward illuminating current polarity, or by two or more than two light emitting diodes in series or parallel connection of forward illuminating current polarity, or by three or more than three light emitting diodes in series connection, parallel connection, or series-parallel connection of forward illuminating current polarity;
5. The discharging resistance (R101) can be constituted by one or by more than ones in series connection, parallel connection, or series-parallel connection;
6. The discharging resistance (R102) can be constituted by one or by more than ones in series connection, parallel connection, or series-parallel connection;
7. The current limiting resistance (R103) can be constituted by one or by more than ones in series connection, parallel connection, or series-parallel connection;
8. The current limiting resistance (R104) can be constituted by one or by more than ones in series connection, parallel connection, or series-parallel connection;
9. The current limiting inductive resistance (I103) can be constituted by one or by more than ones in series connection, parallel connection, or series-parallel connection;
10. The current limiting inductive resistance (I104) can be constituted by one or by more than ones in series connection, parallel connection, or series-parallel connection;
11. The diode (CR101) can be constituted by one diode, or by more than one diodes in series connection of forward polarity, or in parallel connection of the same polarity, or in series-parallel connection;
12. The diode (CR102) can be constituted by one diode, or by more than one diodes in series connection of forward polarity, or in parallel connection of the same polarity, or in series-parallel connection;
13. The zener diode (ZD101) can be constituted by one zener diode, or by more than one zener diodes in series connection of forward polarity, or in parallel connection of the same polarity, or in series-parallel connection;
14. The zener diode (ZD102) can be constituted by one zener diode, or by more than one zener diodes in series connection of forward polarity, or in parallel connection of the same polarity, or in series-parallel connection;
15. The diode (CR201) can be constituted by one diode, or by more than one diodes in series connection of forward polarity, or in parallel connection of the same polarity, or in series-parallel connection;
16. The diode (CR202) can be constituted by one diode, or by more than one diodes in series connection of forward polarity, or in parallel connection of the same polarity, or in series-parallel connection;
17. The charge/discharge device (ESD101) can be constituted by one charge/discharge device or by more than one charge/discharge devices in series connection of forward polarity, or in parallel connection of the same polarity, or in series-parallel connection;
18. The charge/discharge device (ESD102) can be constituted by one charge/discharge device or by more than one charge/discharge devices in series connection of forward polarity, or in parallel connection of the same polarity, or in series-parallel connection;

When applied, the unipolar (dis)charging LED drive method and circuit thereof of the present invention can provide for inputting:
(1) The AC power with constant or variable voltage and constant or variable frequency; or
(2) The electric power with constant or variable voltage and constant or variable polarities alternated periods converted from DC power source; or
(3) The electric power with constant or variable voltage and constant or variable polarities alternated periods converted from DC power which is further rectified from AC power.

In addition, the present invention can be further incorporated with the following active modulating circuit devices, whereof the active modulating circuit devices include:
-- The AC power modulator of series connection type (300): It is constituted by the conventional electromechanical components or solid state power components and related electronic circuit components to be series connected to the LED drive circuit (U 100) capable of charging and discharging for receiving the electric power from AC power source, so as to execute power modulations including pulse width modulation (PWM), conduction phase angle control, and impedance modulation to the AC power with constant or variable voltage and constant or variable frequency from the power source;
-- The AC power modulator of parallel connection type (310): It is constituted by the conventional electromechanical components or solid state power components and related electronic circuit components, whereof its output ends are arranged to be parallel connected to the LED drive circuit (U100) capable of charging and discharging while its input ends are arranged to receive the AC power, so as to execute power modulations including pulse width modulation (PWM), conduction phase angle control, and impedance modulation to the AC power with constant or variable voltage and constant or variable frequency from the power source;
-- The modulated periodically polarities alternated power modulator of series connection type (400): It is constituted by the conventional electromechanical components or solid state power components and related electronic circuit components for series connected to the LED drive circuit (U100) capable of charging and discharging for receiving electric power from the power source, so as to execute power modulations including pulse width modulation (PWM), conduction phase angle control, and impedance modulation to either the electric power with constant or variable voltage and constant or variable polarities alternated periods converted from DC power, or the electric power with constant or variable voltage and constant or variable polarities alternated periods converted from DC power which is further rectified from the AC power source;
-- The modulated periodically polarities alternated power modulator of parallel connection type (410): It is constituted by the conventional electromechanical components or solid state power components and related electronic circuit components, whereof its output ends are arranged to be parallel connected to the LED drive circuit (U100) capable of charging and discharging while its input ends are arranged to receive the electric power from power source, so as to execute power modulations including pulse width modulation (PWM), conduction phase angle control, and impedance modulation to either the electric power with constant or variable voltage and constant or variable polarities alternated periods converted from DC power, or the electric power with constant or variable voltage and constant or variable polarities alternated periods converted from DC power which is further rectified from the AC power source;
-- The DC to AC inverter (4000): It is constituted by the conventional electromechanical components or solid state power components and related electronic circuit components, whereof its input ends are arranged to receive DC power with constant or variable voltage as selected while its output ends are arranged to output electric power of bi-directional sinusoidal wave, or bi-directional square wave or bi-directional pulsed wave with constant or variable voltage and constant or variable polarity alternated periods;
-- The impedance (500): it is comprised of at least one resistive impedance component, inductive impedance component and/or a capacitive impedance component or comprised of at least two or at least two kinds of impedance components mixed to execute series connection, parallel connection or series-parallel connection, whereby to provide DC impedance or AC impedance; or the capacitive impedance component and the inductive impedance component are mutually series connected to have the same frequency of the bi-directional electric power such as AC power from the power source or the same polarities alternated periods of the electric power with constant or variable voltage and constant or variable polarities alternated periods converted from DC power, thereby to appear a series resonance status and a corresponding end voltage status of series resonance across the two ends of the corresponding capacitive impedance component or inductive impedance component; or the capacitive impedance component and the inductive impedance component are mutually parallel connected to have the same frequency of the bi-directional electric power such as AC power from the power source or the same polarities alternated periods of the electric power with constant or variable voltage and constant or variable polarities alternated periods, thereby to appear a parallel resonance status and corresponding end voltage;
-- The switching device (600): it is constituted by dynamo-mechanical switching devices or solid-state switching devices to be arranged to modulate at least two impedance components (500) to execute switches among series, parallel, and series-parallel connections;

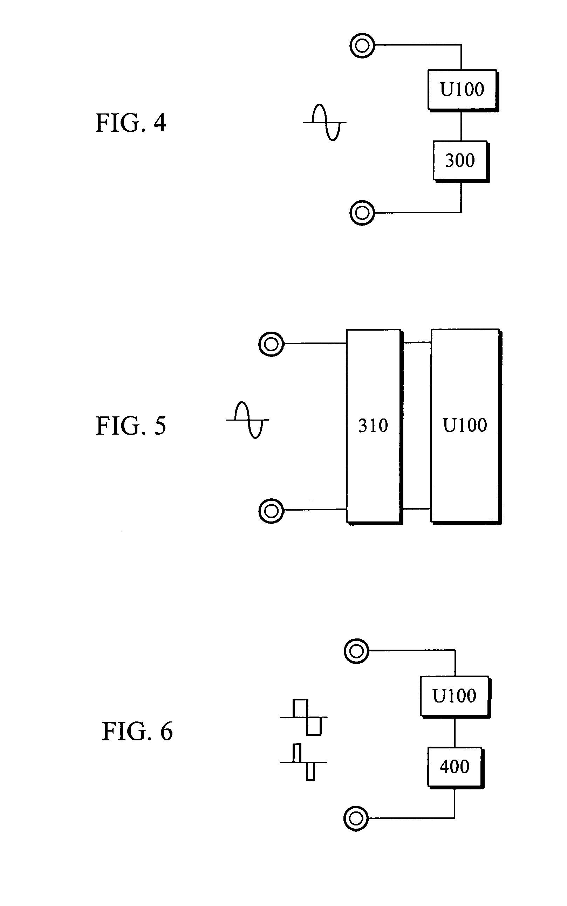

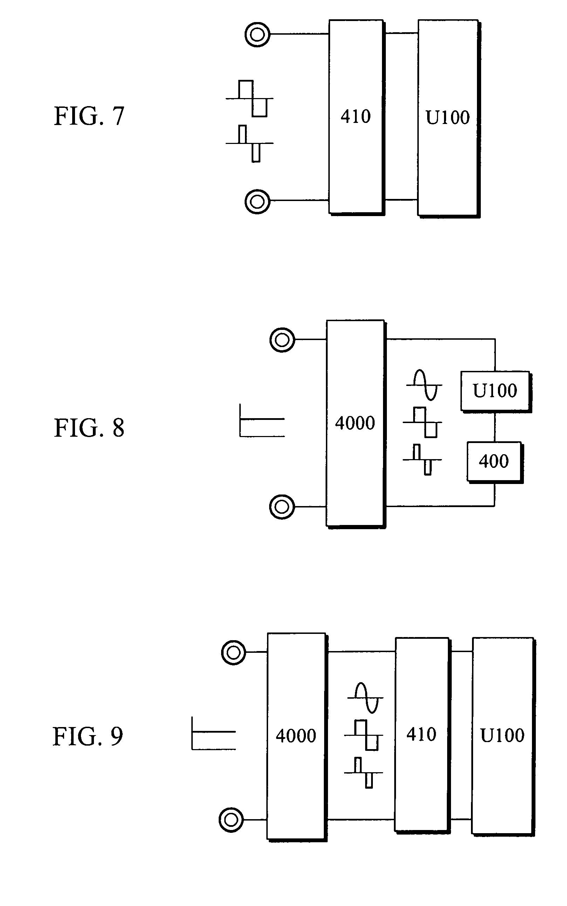

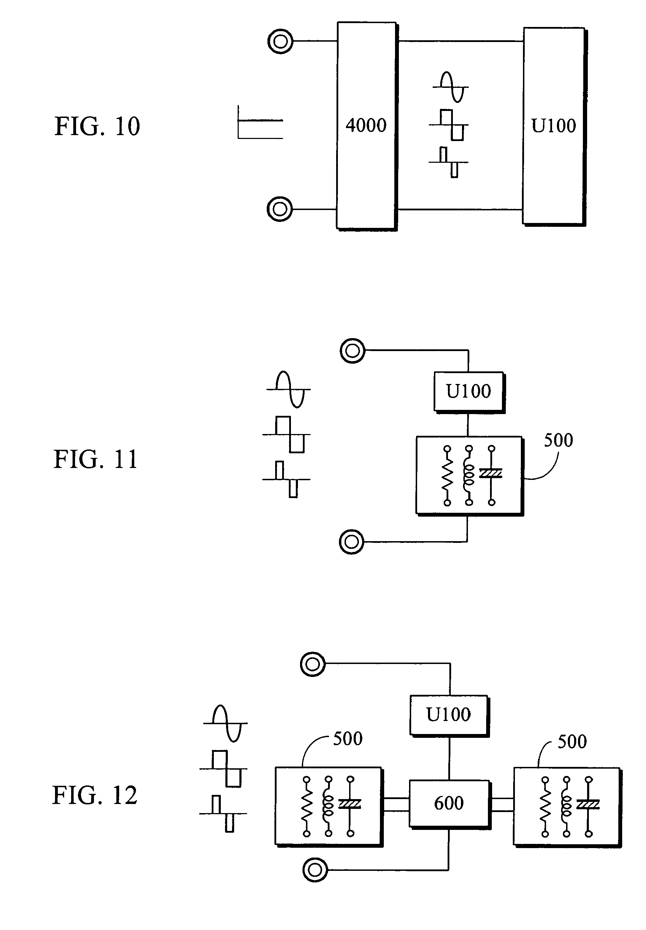

The unipolar (dis)charging LED drive method and circuit thereof of the present invention can constitute various application circuits as following by incorporating one kind of above mentioned active power modulators:
1. The present invention is series connected to an AC power modulator; wherein the LED drive circuit (U100) capable of charging and discharging is series connected to the conventional AC power modulator of series connection type (300) before driven by the inputted AC power with constant or variable voltage and constant or variable frequency, thereby to modulate the inputted power of the LED drive circuit (U100) capable of charging and discharging, whereof the connection method is to series connect the two devices; as illustrated in Fig. 4 is a circuit example schematic block diagram showing the present invention is series connected to an AC power modulator of series connection type;
2. The present invention is parallel connected with an AC power modulator; wherein the LED drive circuit (U100) capable of charging and discharging is parallel connected with the output ends of the conventional AC power modulator of parallel connection type (310) while the AC power with constant or variable voltage and constant or variable frequency is arranged to be inputted to the input ends of the AC power modulator of parallel connection type (310), then delivered through the output ends of the AC power modulator of parallel connection type (310) to the LED drive circuit (U100) capable of charging and discharging for modulating the inputted power of the LED drive circuit (U100) capable of charging and discharging as illustrated in Fig. 5 for a circuit example schematic block diagram of the present invention to be parallel connected with an AC power modulator of parallel connection type;
3. The LED drive circuit (U100) capable of charging and discharging is series connected to the conventional modulated periodically polarities alternated power modulator of series connection type (400) before receiving the electric power with constant or variable voltage and constant or variable polarities alternated periods converted from DC power, or the electric power with constant or variable voltage and constant or variable polarities alternated periods converted from DC power which is further rectified from the AC power, thereby to modulate the inputted power of the LED drive circuit (U100) capable of charging and discharging as illustrated in Fig. 6 for a circuit example schematic block diagram showing that the present invention is series connected to a modulated periodically polarities alternated power modulator of series connection type;
4. The LED drive circuit (U100) capable of charging and discharging is parallel connected with an output end of the conventional modulated periodically polarities alternated power modulator of parallel connection type (410); the electric power with constant or variable voltage and constant or variable polarities alternated periods converted from DC power, or the electric power with constant or variable voltage and constant or variable polarities alternated periods converted from DC power which is further rectified from AC power is arranged to be inputted to an input end of the modulated periodically polarities alternated power modulator of parallel connection type (410) and then outputted from an output end of modulated periodically polarities alternated power modulator of parallel connection type (410) to the LED drive circuit (U100) capable of charging and discharging for modulating the inputted power of the LED drive circuit (U100) capable of charging and discharging as illustrated in Fig. 7 for a circuit example schematic block diagram of the present invention to be parallel connected with a modulated periodically polarities alternated power modulator of parallel connection type;
5. The LED drive circuit (U100) capable of charging and discharging is series connected to the conventional modulated periodically polarities alternated power modulator of series connection type (400) before being parallel connected with an output end of the DC to AC inverter (4000); a DC power with constant or variable voltage selected as applicable is inputted into an input end of the DC to AC inverter (4000) while the output end of the DC to AC inverter (4000) outputs the electric power of bi-directional sinusoidal wave, or bi-directional square wave or bi-directional pulsed wave with constant or variable voltage and constant or variable polarities alternated periods selected as applicable to the LED drive circuit (U100) capable of charging and discharging for modulating the inputted power of the LED drive circuit (U100) capable of charging and discharging as illustrated in Fig. 8 for a circuit example schematic block diagram showing that the present invention is series connected to a modulated periodically polarities alternated power modulator of series connection type before being driven by the electric power outputted from a DC to AC inverter;
6. The LED drive circuit (U100) capable of charging and discharging is parallel connected with the an output end of the conventional modulated periodically polarities alternated power modulator of parallel connection type (410); a DC power with constant or variable voltage selected as applicable is inputted into an input end of the DC to AC inverter (4000) while the output end of the DC to AC inverter (4000) outputs electric power of bi-directional sinusoidal wave, or bi-directional square wave or bi-directional pulsed wave with constant or variable voltage and constant or variable polarity alternated periods selected as applicable to an input end of the modulated periodically polarities alternated power modulator of parallel connection type (410) before being outputted to the LED drive circuit (U100) capable of charging and discharging through an output end of the modulated periodically polarities alternated power modulator of parallel connection type (410) for modulating the inputted power of the LED drive circuit (U100) capable of charging and discharging as illustrated in Fig. 9 for a circuit example schematic block diagram showing that the present invention is parallel connected with a modulated periodically polarities alternated power modulator of parallel connection type before being driven by the electric power outputted from a DC to AC inverter;
7. The LED drive circuit. (U100) capable of charging and discharging is parallel connected with an output end of the conventional DC to AC inverter (4000); a DC power with constant or variable voltage selected as applicable is inputted into an input end of the DC to AC inverter (4000) while the output end of the DC to AC inverter (4000) outputs electric power of bi-directional sinusoidal wave, or bi-directional square wave or bi-directional pulsed wave with constant or variable voltage and constant or variable polarity alternated periods selected as applicable to the LED drive circuit (U100) capable of charging and discharging for modulating the inputted power of the LED drive circuit (U100) capable of charging and discharging as illustrated in Fig. 10 for a circuit example schematic block diagram showing that the present invention is driven by the electric power outputted from a DC to AC inverter;
8. The LED drive circuit (U100) capable of charging and discharging is series connected to at least one conventional impedance component (500) before being parallel connected with a power source; wherein the impedance component (500) is comprised of:
   (1) An impedance component (500): it is constituted by a component with capacitive impedance characteristics; or
   (2) An impedance component (500): it is constituted by a component with inductive impedance characteristics; or
   (3) An impedance component (500): it is constituted by a component with resistive impedance characteristics; or
   (4) An impedance component (500): it is constituted by a single impedance component with the combined impedance characteristics of at least two characteristics of the resistive impedance, or inductive impedance, or capacitive impedance simultaneously, thereby to provide DC or AC impedances; or
   (5) An impedance component (500): it is constituted by a single impedance component with the combined impedance characteristics of capacitive impedance and inductive impedance, whereof its inherent resonance frequency is the same as the frequency of the bi-directional electric power such as the AC power from the power source or the polarities alternated periods of the electric power with constant or variable voltage and constant or variable polarities alternated periods converted from DC power, thereby to produce a parallel resonance status; or
   (6) An impedance component (500): it is constituted by capacitive impedance components, or inductive impedance components, or resistive impedance components, including one or more than one kind of and one and more than one impedance component, or two or more than two kinds of one or more than one impedance components in series connection, or parallel connection, or series-parallel connections, thereby to provide a DC or AC impedance; or
   Or the capacitive impedance component and the inductive impedance component are in mutual series connection, whereby its inherent series resonance frequency is the same as the frequency of bi-directional electric power such as the AC power from power source, or the periods of the periodically alternated polarities DC power converted from DC power, thereby to produce an impedance status of series resonance status and appear the corresponding end voltage of series resonance at the two ends of corresponding capacitive impedance component or inductive impedance component;
   Or the capacitive impedance component and the inductive impedance component are in mutual parallel connection, whereby its inherent parallel resonance frequency is the same as the frequency of bi-directional electric power such as the AC power from power source, or the periods of the periodically alternated polarities DC power converted from DC power, thereby to produce an impedance status of parallel resonance status and appear the corresponding end voltage;
   Fig. 11 is a circuit example schematic block diagram showing that the present invention is series connected to an impedance component.
9. At least two impedance components (500) as said in the item 8 execute switches between series connection, parallel connection and series-parallel connection by means of the switching device (600) which is constituted by electromechanical components or solid state components, whereby to modulate the power transmitted to the LED drive circuit (U100) capable of charging and discharging, wherein Fig. 12 is a circuit example schematic block diagram showing that impedance components connected in series to the present invention executes series connection, parallel connection, or series-parallel connection by means of a switching device.

Colors of the individual light emitting diodes (LED 101) and (LED 102) of the first component (U101) and the second component (U102) in the unipolar (dis)charging LED drive method and circuit thereof can be optionally selected to be constituted by one or more than one colors.

The relationships of location arrangement between the individual light emitting diodes (LED101) and (LED 102) of the first component (U101) and the second component (U102) in the unipolar (dis)charging LED drive method and circuit thereof include the following: 1) sequentially linear arrangement; 2) sequentially distributed in a plane; 3) crisscross-linear arrangement; 4) crisscross distribution in a plane; 5) arrangement based on particular geometric positions in a plane; 6) arrangement based on 3D geometric position.

The unipolar (dis)charging LED drive method and circuit thereof, in which it is constituted by circuit components which include: 1) It is constituted by individual circuit components which are inter-connected; 2) At least two circuit components are combined to at least two partial functioning units which are further inter-connected; 3) All components are integrated together to one structure.

Accordingly, a unipolar (dis)charging LED drive method and circuit thereof the present invention provides advanced features of power saving, low thermal loss and low cost in driving an LED by capacitance unipolar charging and discharging operation.

Preferably, the LED drive circuit (U100) is series connected to at least one conventional impedance component (500) before being parallel connected with a power source; the impedance component (500) being constituted by:
1) an impedance component (500) constituted by a component with capacitive impedance characteristics; or
2) an impedance component (500) constituted by a component with inductive impedance characteristics; or
3) an impedance component (500) constituted by a component with resistive impedance characteristics; or
4) an impedance component (500) constituted by a single impedance component with the combined impedance characteristics of at least two characteristics of resistive impedance, or inductive impedance, or capacitive impedance simultaneously, thereby to provide DC or AC impedances; or
5) an impedance component (500) constituted by a single impedance component with the combined impedance characteristics of capacitive impedance and inductive impedance, whereby its inherent resonance frequency is the same as the frequency of the bi-directional electric power such as the AC power from the power source or the polarities alternated periods of the electric power with constant or variable voltage and constant or variable polarities alternated periods converted from DC power, thereby to produce a parallel resonance status; or
6) an impedance component (500) constituted by capacitive impedance components, or inductive impedance components, or resistive impedance components, including one or more kind of, and one and more impedance component, or two or more kinds of, and one or more impedance components in series connection, or parallel connection, or series-parallel connections, thereby to provide a DC or AC impedance;
   or the capacitive impedance component and the inductive impedance component are in mutual series connection, whereby the inherent series resonance frequency is the same as the frequency of bi-directional electric power such as the AC power from power source, or the periods of the periodic alternated polarities DC power converted from DC power, thereby to produce an impedance status of series resonance status, and provide the corresponding end voltage of series resonance at the two ends of corresponding capacitive impedance component or inductive impedance component;
   or the capacitive impedance component and the inductive impedance component are in mutual parallel connection, whereby the inherent parallel resonance frequency is the same as the frequency of bi-directional electric power such as the AC power from the power source, or the periods of the periodic alternated polarities DC power converted from DC power, thereby to produce an impedance status of parallel resonance status and provide the corresponding end voltage.

Advantageously, at least two impedance components (500) are provided to execute switches between series connection, parallel connection and series-parallel connection by means of the switching device (600) which is constituted by electromechanical components or solid state components, thereby to modulate the power transmitted to the LED drive circuit (U100).

## Claims

1. A unipolar LED drive circuit (U100) comprising a first component (U101) series connected with reverse polarity to a second component (U102), the first component comprising a diode (CR101) series connected with forwards polarity to a light emitting diode (LED101), with a first unipolar capacitor (C101) of the same polarity connected in parallel with the first diode and the first light emitting diode, the second component having a second diode (CR102) and a second unipolar capacitor (C102).

2. A unipolar charging/discharging LED drive circuit (U 100) comprising a first component (U101) and a second component (U102) in series connection with reverse polarity, wherein the first component is constituted by a first diode (CR101) connected in series with forwards polarity with a first light emitting diode (LED101) before being connected in parallel with the same polarity with a first unipolar capacitor (C101); and the second component being such that: 1) when a second light emitting diode (LED102) is installed, a second diode (CR102) is series connected with that light emitting diode with forwards polarity before being parallel connected with the same polarity to a second unipolar capacitor (C102), thereby to constitute a first type of the second component; and 2) if the second light emitting diode is not installed, the second diode is parallel connected with the same polarity with the second unipolar capacitor to constitute a second type of the second component;
the first component is connected in series with reverse polarity with either type of the second component to constitute an LED drive circuit (U100) capable of charging and discharging for inputting:
1) AC power with constant or variable voltage and constant or variable frequency; or
2) electric power with constant or variable voltage and constant or variable polarities in alternating periods converted from a DC power source; or
3) electric power with constant or variable voltage and constant or variable polarities alternating periods, converted from DC power rectified from AC power.

3. A circuit as claimed in claim 2, having
a unipolar capacitor constituted by unipolar capacitors (C101, C102) that are capable of unipolar charging and discharging, wherein said unipolar capacitors may be of same or different electric capacity;
a first component (U101) constituted by a diode (CR101) capable of executing uni-directional conduction in series connection with forwards polarity to at least one light emitting diode (LED101), before being parallel connected with the same polarity to a unipolar capacitor (C101), thereby to constitute the first component;
a second component (U102) constituted by a diode (CR102) capable of executing uni-directional conduction in series connection with forwards polarity to at least one light emitting diode (LED 102), before being parallel connected with the same polarity to a unipolar capacitor (C 102), thereby to constitute the second component; wherein
the first component is constituted by one or by more than one in series connection, parallel connection, or series-parallel connection;
the second component is constituted by one or by more than one in series connection, parallel connection, or series-parallel connection; and wherein
if the light emitting diode (LED 102) is not installed, the diode (CR102) is directly parallel connected with the same polarity to the unipolar capacitor (C 102), thereby to constitute the second component (U102);
the first component and the second component are series connected with reverse polarity to constitute the LED drive circuit (U100) capable of charging and discharging, and the two ends of the LED drive circuit are arranged for inputting:
1) the AC power with constant or variable voltage and constant or variable frequency; or
2) electric power with constant or variable voltage and constant or variable polarities alternating periods, converted from DC power source; or
3) electric power with constant or variable voltage and constant or variable polarities alternating periods, converted from DC power which is rectified from AC power; and wherein
the LED drive circuit has one or more than one matching modes available for choice among the light emitting diode (LED101) constituting the first component (U101), and the light emitting diode (LED 102) constituting the second component (U102); including:
1) the light emitting diode (LED101) is comprised of one or a plurality of light emitting diodes;
2) if the second component (U102) includes the light emitting diode (LED 102), the light emitting diode (LED 102) is comprised of one or a plurality of light emitting diodes;
3) the light emitting diode (LED101) and the light emitting diode (LED102) are each constituted by one light emitting diode with forwards illuminating current polarity, or are each constituted by two or more light emitting diodes with forwards illuminating current polarity in series or parallel connection, or are each constituted by three or more light emitting diodes with forwards illuminating current polarity in series connection, parallel connection or series-parallel connection;
4) the number of light emitting diodes which constitute the light emitting diode (LED 101), and the number of light emitting diodes which constitute the light emitting diode (LED 102) can be the same or different; and wherein
5) if the electric power source is an AC power source, or a bi-directional power source with polarity alternating periods that is converted from a DC power source, the light emitting diode (LED 101) or the light emitting diode (LED 102) is not continuously charged by the DC power, thereby allowing selection of a peak value of the working voltage for each light emitting diode with reference to the inputted voltage wave shape and duty cycle of current conduction and disconnection, as well as a selected working current value; the selections include i) having a voltage lower than a normal rated voltage as the peak voltage; ii) having the normal rated voltage as the peak voltage; and iii) having a voltage higher than the normal rated voltage as the peak voltage; and wherein
when the power source has a polarity to charge the unipolar capacitor (C102) from the second component (U102) through the diode (CR101) and the light emitting diode (LED101) from the first component (U101), and the charged electric power keeps the light emitting diode (LED101) illuminated; and has the other polarity to charge the unipolar capacitor (C101) from the first component (U101) through the diode (CR102) and the light emitting diode (LED102) from the second component (U102), and the charged electric power keeps the light emitting diode (LED102) illuminated; if the second component (U102) is not provided with the light emitting diode (LED 102), the electric power directly charges the unipolar capacitor (C101) from the first component (U101) through the diode (CR102) of the second component (U102).

4. A circuit as claimed in claim 3, wherein, in practical applications, the LED drive circuit (U100) is disposed with multiple auxiliary circuit components as applicable, including the selection of either to be or not to be installed as needed, and the selection of the installed quantity to be one or more than one; in case of more than one components being selected, they can be in series connection, parallel connection or series-parallel connection of selected polarity relationship according to the requirements of the circuit function; the constituted components and the optional auxiliary circuit devices including:
a discharging resistance (R101) connected in parallel with both ends of the unipolar capacitor (C101) from the first component (U101) to discharge residual electric charge from the unipolar capacitor (C101);
a discharging resistance (R102) connected in parallel with both ends of the unipolar capacitor (C102) from the second component (U102) to discharge residual electric charge from the unipolar capacitor (C102);
a current limiting resistance (R103) which is arranged to be respectively connected in series with the diode (CR101) and the light emitting diode (LED101) from the first component (U101), to limit current passing through the light emitting diode (LED 101); the current limiting resistance (R103) may be replaced with an inductive resistance (I103);
a current limiting resistance (R104) which is arranged to be respectively connected in series to the diode (CR102) and the light emitting diode (LED 102) from the second component (U102), to limit current passing through the light emitting diode (LED 102); the current limiting resistance (R104) may be replaced with an inductive resistance (I104).

5. A circuit as claimed in claim 3, wherein to avoid the light emitting diode being damaged or having a reduced service life by abnormal voltage, the LED drive circuit (U100) is provided with a Zener diode connected in parallel with both ends of the light emitting diode, or at least one Zener diode may be series connected with at least one diode jointly to generate a Zener voltage function for parallel connection to both ends of the light emitting diode, including:
a Zener diode (ZD101) parallel connected to both ends of the light emitting diode (LED101) from the first component (U101), their polarity relationship being such that the Zener voltage of the zener diode (ZD101) is used to limit the working voltage across the two ends of the light emitting diode (LED101); as applicable, the diode (CR201) may be selected to be series connected with the Zener diode (ZD101), thereby providing advantages of 1) protecting the Zener diode (ZD101) against reverse current; and 2) achieving temperature compensation results between the Zener diode (ZD101) and the diode (CR20 1);
when the light emitting diode (LED 102) is installed in the second component (U102), a Zener diode (ZD 102) is parallel connected with both ends of the light emitting diode (LED 102), their polarity relationship being such that the Zener voltage of the Zener diode (ZD102) is used to limit the working voltage across the two ends of the light emitting diode (LED 102); as applicable, the diode (CR202) may be selected to be series connected with the Zener diode (ZD102), thereby providing advantages of 1) protecting the Zener diode (ZD102) against reverse current; and 2) achieving temperature compensation results between the Zener diode (ZD 102) and the diode (CR202).

6. A circuit as claimed in claim 5, wherein, to achieve the lighting stability of the light source produced by the light emitting diode and reduce the lighting pulsation, both or at least one of the first component (U101) and the second component (U 102) can be further installed with a charge/discharge device, including:
the two ends of the light emitting diode (LED101) and the current limiting resistance (R103) in series connection from the first component (U101), or directly at the two ends of the light emitting diode (LED101) can be further parallel connected with a charge/discharge device (ESD101) according to the polarity for randomly charging or discharging the electric power, whereby to stabilise the operation of light emission from the light emitting diode (LED101); if the light emitting diode (LED 102) is installed in the second component (U102), a charge/discharge device (ESD102) can be selected as needed to be parallel connected with the two ends of the light emitting diode (LED 102) and the current limiting resistance (R104) in series connection, or directly parallel connected at the two ends of the light emitting diode (LED 102) according to the polarity for randomly charging or discharging the electric power, whereby to stabilise the operation of light emission from the light emitting diode (LED 102);
the charge/discharge devices (ESD101 and ESD102) are constituted by conventional charging and discharging batteries, or super-capacitors or capacitors.

7. A circuit as claimed in claim 6, wherein both or at least one of the first component (U101) and the second component (U102) can be further disposed with the charge/discharge devices (ESD101, ESD102) for randomly charging or discharging the electric power, thereby to stabilise the operation of light emission from the light emitting diodes (LED101 and LED 102); and, in case of power failure, either or both of the reserve electric power in the charge/discharge devices (ESD101 and ESD 102) discharges the reserve electric power, so as to continue supplying power to maintain at least one of the light emitting diodes (LED101 and LED 102) illuminated.

8. A circuit as claimed in claim 3, further comprising the following active modulating circuit devices, constituted by one or more than one following devices, including:
an AC power modulator of series connection type (300) constituted by conventional electromechanical components or solid state power components and related electronic circuit components to be series connected to the LED drive circuit (U100) for receiving electric power from an AC power source, so as to execute power modulations including pulse width modulation (PWM), conduction phase angle control, and impedance modulation of AC power with constant or variable voltage and constant or variable frequency from the power source;
an AC power modulator of parallel connection type (310) constituted by conventional electromechanical components or solid state power components and related electronic circuit components, whereof its output ends are arranged to be parallel connected to the LED drive circuit (U100), while its input ends are arranged to receive AC power, so as to execute power modulations including pulse width modulation (PWM), conduction phase angle control, and impedance modulation to AC power with constant or variable voltage and constant or variable frequency from the power source;
a modulated periodic polarities alternated power modulator of series connection type (400) constituted by conventional electromechanical components or solid state power components and related electronic circuit components for series connected to the LED drive circuit (U100) for receiving electric power from the power source, so as to execute power modulations including pulse width modulation (PWM), conduction phase angle control, and impedance modulation to either the electric power with constant or variable voltage and constant or variable polarities alternated periods converted from DC power, or the electric power with constant or variable voltage and constant or variable polarities alternated periods converted from DC power which is further rectified from the AC power source;
a modulated periodic polarities alternated power modulator of parallel connection type (410) constituted by conventional electromechanical components or solid state power components and related electronic circuit components, whereof its output ends are arranged to be parallel connected to the LED drive circuit (U100), while its input ends are arranged to receive electric power from the power source, so as to execute power modulations including pulse width modulation (PWM), conduction phase angle control, and impedance modulation to either the electric power with constant or variable voltage and constant or variable polarities alternated periods converted from DC power, or the electric power with constant or variable voltage and constant or variable polarities alternated periods converted from DC power which is rectified from the AC power source;
a DC to AC inverter (4000) constituted by conventional electromechanical components or solid state power components and related electronic circuit components, whereof its input ends are arranged to receive DC power with constant or variable voltage as selected, while its output ends are arranged to output electric power of bi-directional sinusoidal wave, or bi-directional square wave or bi-directional pulsed wave with constant or variable voltage and constant or variable polarity alternated periods;
an impedance (500) constituted by at least one resistive impedance component, inductive impedance component and/or a capacitive impedance component or constituted by at least two kinds of impedance components mixed to execute series connection, parallel connection or series-parallel connection, thereby to provide DC impedance or AC impedance; or the capacitive impedance component and the inductive impedance component are mutually series connected to have the same frequency as the bi-directional electric power such as AC power from the power source, or the same polarities alternated periods of the electric power with constant or variable voltage and constant or variable polarities alternated periods converted from DC power, thereby to provide a series resonance status and a corresponding end voltage status of series resonance across the two ends of the corresponding capacitive impedance component or inductive impedance component; or the capacitive impedance component and the inductive impedance component are mutually parallel connected to have the same frequency of the bi-directional electric power such as AC power from the power source or the same polarities alternated periods of the electric power with constant or variable voltage and constant or variable polarities alternated periods, thereby to appear a parallel resonance status and corresponding end voltage;
a switching device (600) constituted by dynamo-mechanical switching devices or solid-state switching devices arranged to modulate at least two impedance components (500) to execute switches among series, parallel, and series-parallel connections.

9. A circuit as claimed in claim 8, wherein the LED drive circuit (U100) is series connected to the conventional AC power modulator of series connection type (300) before being driven by the inputted AC power with constant or variable voltage and constant or variable frequency, thereby to modulate the inputted power of the LED drive circuit (U100), whereby the connection method is to series connect the two devices.

10. A circuit as claimed in claim 8, wherein the LED drive circuit (U100) is parallel connected with the output ends of the conventional AC power modulator of parallel connection type (310), while the AC power with constant or variable voltage and constant or variable frequency is arranged to be inputted to the input ends of the AC power modulator of parallel connection type (310), then delivered through the output ends of the AC power modulator of parallel connection type (310) to the LED drive circuit (U 100) for modulating the inputted power of the LED drive circuit (U100).

11. A circuit as claimed in claim 8, wherein the LED drive circuit (U100) is series connected to the conventional modulated periodic polarities alternated power modulator of series connection type (400) before receiving electric power with constant or variable voltage and constant or variable polarities alternated periods converted from DC power, or the electric power with constant or variable voltage and constant or variable polarities alternated periods converted from DC power which is rectified from the AC power, thereby to modulate the inputted power of the LED drive circuit (U 100).

12. A circuit as claimed in claim 8, wherein the LED drive circuit (U100) is parallel connected with an output end of the conventional modulated periodic polarities alternated power modulator of parallel connection type (410); the electric power with constant or variable voltage and constant or variable polarities alternated periods converted from DC power, or the electric power with constant or variable voltage and constant or variable polarities alternated periods converted from DC power which is rectified from AC power is arranged to be inputted to an input end of the modulated periodic polarities alternated power modulator of parallel connection type (410), and then outputted from an output end of modulated periodic polarities alternated power modulator of parallel connection type (410) to the LED drive circuit (U 100) for modulating the inputted power of the LED drive circuit (U100).

13. A circuit as claimed in claim 8, wherein the LED drive circuit (U100) is series connected to the conventional modulated periodic polarities alternated power modulator of series connection type (400) before being parallel connected with an output end of the DC to AC inverter (4000); a DC power with constant or variable voltage selected as applicable is inputted into an input end of the DC to AC inverter (4000), while the output end of the DC to AC inverter (4000) outputs the electric power of bi-directional sinusoidal wave, or bi-directional square wave or bi-directional pulsed wave with constant or variable voltage and constant or variable polarities alternated periods selected as applicable to the LED drive circuit (U100) for modulating the inputted power of the LED drive circuit (U100).

14. A circuit as claimed in claim 8, wherein the LED drive circuit (U100) is parallel connected with the output end of the conventional modulated periodic polarities alternated power modulator of parallel connection type (410); a DC power with constant or variable voltage selected as applicable is inputted into an input end of the DC to AC inverter (4000), while the output end of the DC to AC inverter (4000) outputs electric power of bi-directional sinusoidal wave, or bi-directional square wave or bi-directional pulsed wave with constant or variable voltage and constant or variable polarity alternated periods selected as applicable to an input end of the modulated periodic polarities alternated power modulator of parallel connection type (410) before being outputted to the LED drive circuit (U100) through an output end of the modulated periodic polarities alternated power modulator of parallel connection type (410) for modulating the inputted power of the LED drive circuit (U100). 15. A circuit as claimed in claim 8, wherein the LED drive circuit (U100) is parallel connected with an output end of the conventional DC to AC inverter (4000); a DC power with constant or variable voltage selected as applicable is inputted into an input end of the DC to AC inverter (4000), while the output end of the DC to AC inverter (4000) outputs electric power of bi-directional sinusoidal wave, or bi-directional square wave or bi-directional pulsed wave with constant or variable voltage and constant or variable polarity alternated periods selected as applicable to the LED drive circuit (U100) for modulating the inputted power of the LED drive circuit (U100).
